# EUROPEAN PATENT SPECIFICATION

(11) **EP 3 101 539 B1**
(45) Date of publication and mention of the grant of the patent: **20.01.2021**
(21) Application number: 16172712.8
(22) Date of filing: 02.06.2016
(51) Int. Cl.: G06F 9/445, G06F 8/71, G06F 8/65

(54) **SELECTION OF COMPATIBLE RESOURCES AFTER UPDATING WEB APPLICATION SERVERS**
AUSWAHL KOMPATIBLER RESSOURCEN NACH AKTUALISIERUNG VON WEB-APPLIKATIONSSERVERN
SÉLECTION DES RESSOURCES COMPATIBLES APRÈS LA MISE À JOUR DES SERVEURS D'APPLICATIONS WEB

(30) Priority: 05.06.2015 JP 2015115166
(43) Date of publication of application: 07.12.2016
(73) Proprietor: Canon Kabushiki Kaisha, Tokyo 146-8501 (JP)
(72) Inventor: MIHARA, Makoto, Ohta-ku, Tokyo (JP)
(74) Representative: Canon Europe Limited

(56) References cited:
- US-A1- 2008 320 460

## Description

### BACKGROUND OF THE INVENTION

### Field of the Invention

The present invention relates to a system, a server system, a method, and a program for providing a cloud service.

### Description of the Related Art

Cloud services provided on the Internet have been prevalent in recent years. Cloud services are constantly used from around the world. Unlike conventional services, cloud services are therefore difficult to do maintenance while stopping the system at nighttime when the number of users is small. There is thus a growing demand to do maintenance work without stopping the services. As discussed in Japanese Patent Application Laid-Open No. 2013-182413 and Japanese Patent Application Laid-Open No. 2013-182397, such maintenance work has conventionally been performed by doing nonstop version upgrade under session management and performing session-based allocation processing.

As web application technology advances, conventional configurations of performing processing for generating a screen on a server side and returning the processing result to a client have been shifting to techniques such as representational state transfer (REST)-ful model-view-controller (MVC) and client side MVC. Such servers are configured to execute processing via a REST interface (I/F), and configured to return only data to a client so that a screen is generated on the client side.

US2008/320460 discloses confirming a request from a request transmission source and providing a versioned resource that is preferable for the request.

### SUMMARY OF THE INVENTION

The invention is defined in the appended independent claims, preferred embodiments are defined in the appended dependent claims.

Further features of the present invention will become apparent from the following description of embodiments with reference to the attached drawings.

### BRIEF DESCRIPTION OF THE DRAWINGS

Fig. 1 is a system configuration diagram.
Fig. 2 is a hardware configuration diagram of each apparatus.
Fig. 3 is a software module configuration diagram of each apparatus.
Fig. 4 is a flowchart illustrating processing for building programs into an executable form.
Fig. 5 illustrates an example of hypertext markup language (HTML) and JavaScript (registered trademark) generated by build processing.
Fig. 6 is a flowchart illustrating processing for deploying modules.
Fig. 7 illustrates a sequence in which a client terminal uses an application service.
Fig. 8 is a flowchart illustrating processing of a representational state transfer (REST) application programming interface (API) when an unexpected request is received.
Fig. 9 is a schematic diagram illustrating processing from build to deployment of programs.
Fig. 10 is a schematic diagram illustrating a sequence in which a client terminal uses an application service.

### DESCRIPTION OF THE EMBODIMENTS

Each of the embodiments of the present invention described below can be implemented solely or as a combination of a plurality of the embodiments or features thereof where necessary or where the combination of elements or features from individual embodiments in a single embodiment is beneficial.

As a new technique for implementing nonstop upgrade, a method called blue-green deployment is used. This technique includes constructing an upgraded service on another system while the currently-active service is kept running, and switching the source of the service to the constructed system.

By the blue-green deployment, the two systems are instantly switched by changing a setting of a domain name system (DNS). However, contents, for example, of hypertext markup language (HTML) and JavaScript (registered trademark) cached in a client-side web browser or on an Internet path are not necessarily updated to the latest ones immediately even if the servers are switched. In such a case, a processing request may be made from an HTML of a pre-upgraded old application to a REST application programming interface (API) of an upgraded new application. Such an API call is allowed because the application is upgraded while maintaining compatibility between the I/Fs of the REST APIs.

There is a problem that contents closely related to screen HTMLs, such as resource data (display text) of a screen to be obtained by the REST APIs, are not able to be dealt with by only the compatibility of the I/Fs. For example, if an old version of an HTML obtains incompatible resources of a new version of an application from a new version of the REST API, an appropriate screen is not displayed.

The present invention is directed to maintaining compatibility of screen HTMLs in addition to the compatibility of I/Fs in a system that includes a mechanism for providing a service nonstop.

A configuration for carrying out the present invention will be described below with reference to the drawings.

A first embodiment will be described below. In the present embodiment, applications are assumed to be installed in respective servers on the Internet. The applications are assumed to provide various functions in cooperation with client terminals. Entities that provide such functions will be referred to as services. The provision of a function to a client terminal will be referred to as the provision of a service.

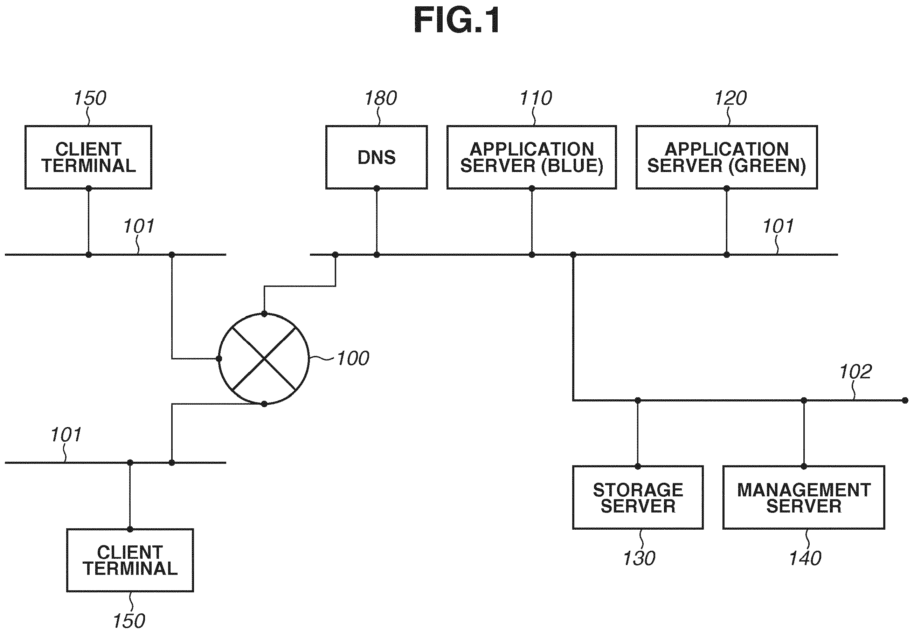

A information processing apparatus for providing a cloud service according to the present embodiment is implemented on a network having a configuration illustrated in Fig. 1. In an embodiment of the present invention, a wide area network (WAN) 100 is configured as a World Wide Web (WWW) system. Local area networks (LANs) 101 connect components. A LAN 102 is similar to the LANs 101, but is often configured as an internal network that is not accessible via the WAN 100. Similarly to the LANs 101, the LAN 102 may be directly connected to and accessible to the WAN 100. Application servers 110 and 120 each typically include a plurality of information processing apparatuses. The application server 110 is a system that is currently providing the cloud service. The application server 120 is a system that provides an upgraded cloud service. A storage server 130 typically includes a plurality of information processing apparatuses.

The storage server 130 is accessed from the application servers 110 and 120, and stores resource data for the application servers 110 and 120. A management server 140 typically includes a plurality of information processing apparatuses. The management server 140 manages programs for the application servers 110 and 120, constructs systems of the application servers 110 and 120, and performs processing for switching source server systems of a source providing services. Client terminals 150 are information processing apparatuses in each of which a web browser is installed. Examples of the client terminals 150 include personal computers and mobile terminals such as a smartphone.

A DNS 180 is a system that resolves hostnames of servers on the Internet and returns internet protocol (IP) addresses to be accessed. The switching of services by blue-green deployment is implemented when an IP address corresponding to a hostname registered in the DNS 180 is switched from that of the application server 110 to that of the application server 120. When a client terminal 150 uses the cloud service, the client terminal 150 obtains the IP address of the server corresponding to the hostname input on the web browser from the DNS 180, and accesses the application server running at that time based on the obtained IP address.

In the present embodiment, the servers are illustrated to each include one apparatus. However, as described above, each server may include a plurality of apparatuses. In the present embodiment, thus, a server including one or a plurality of apparatuses will be referred to as a server system. For example, an application server system refers to a system that includes one or a plurality of apparatuses and provides an application service.

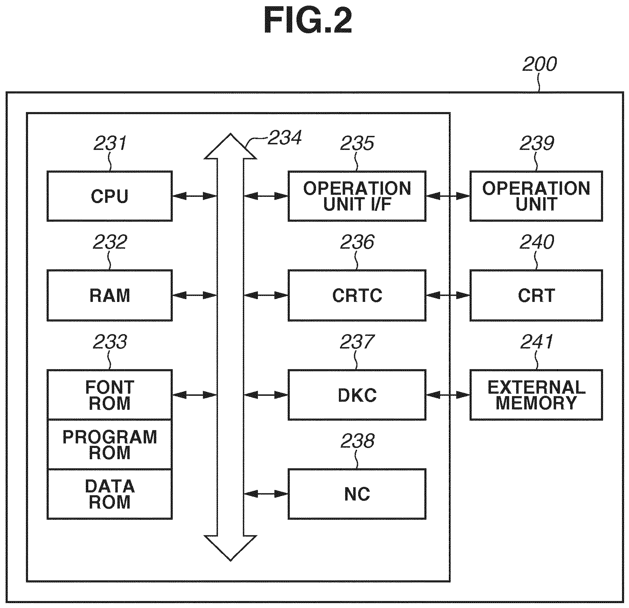

Fig. 2 illustrates a typical configuration of the information processing apparatuses that includes the application servers 110 and 120, the storage server 130, the management server 140, the client terminals 150, and the DNS 180 according to the present embodiment. A central processing unit (CPU) 231 executes programs such as an operating system (OS) and an application which are stored in a program read-only memory (ROM) of a ROM 233 or loaded into a random access memory (RAM) 232 from an external memory 241 such as a hard disk (HD). The CPU 231 controls blocks connected to a system bus 234. The processing of sequences to be described below can be implemented by the execution of the programs. The RAM 232 functions as a main memory and a work area of the CPU 231. An operation unit I/F 235 controls input from an operation unit 239. A cathode-ray tube (CRT) controller (CRTC) 236 controls display of a CRT display 240. A disk controller (DKC) 237 controls access to data in the external memory 241 such as an HD in which various types of data are stored. A network controller (NC) 238 performs control processing for communication with server computers and other devices connected via the WAN 100 or the LANs 101 and 102.

In all of the following description, the main hardware component that executes operations described below is the CPU 231 unless otherwise specified. The main components of the software are modules installed in the external memory 241. The modules provide their functions if executed by the CPU 231.

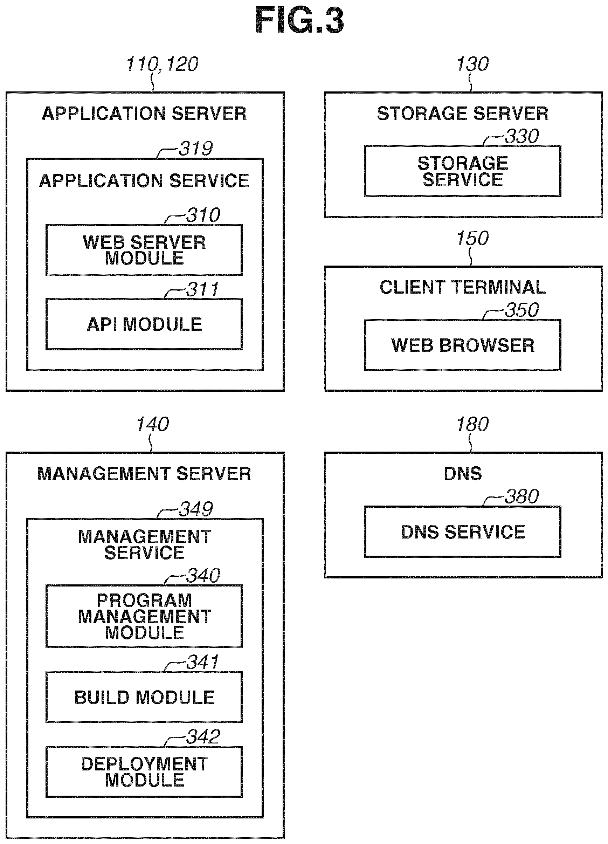

Fig. 3 is a diagram illustrating respective module configurations of the application servers 110 and 120, the storage server 130, the management server 140, the client terminal 150, and the DNS 180. The modules are stored in the external memory 241 and executed by the CPU 231.

The application servers 110 and 120 include an application service 319. The application service 319 is implemented by a web server module 310 and an API module 311. The web server module 310 typically uses Jetty or Apache Tomcat to distribute HTMLs and a script, i.e., JavaScript (registered trademark), and provide an execution environment of the API module 311. The application servers 110 and 120 execute the web server module 310 to implement processing related to the Hypertext Transfer Protocol (HTTP). The application servers 110 and 120 execute the API module 311 to implement API processing. In an embodiment of the present invention, blue-green deployment for upgrade is assumed, and the configuration of the modules in the application server 110 before switching and that of the modules in the application server 120 after switching are assumed to be different in part. Examples of such a difference include a change in the configuration of the web server module 310 due to a change of HTML expressions.

The storage server 130 includes a storage service 330. The storage server 130 manages data and provides a data management function for the application servers 110 and 120. The storage service 330 is implemented by a storage module (not illustrated). The management server 140 includes a management service 349. The management service 349 includes a program management module 340, a build module 341, and a deployment module 342. The program management module 340 manages programs for providing the application servers 110 and 120. The build module 341 configures the programs managed by the program management module 340 into modules in an executable form. The deployment module 342 constructs the environments of the application servers 110 and 120 and performs upgrade processing of the application service 319 by using the modules in an executable form generated by the build module 341.

The client terminal 150 includes a web browser 350 for accessing the application servers 110 and 120. The web browser 350 receives various types of data for screen display from the application servers 110 and 120. The DNS 180 includes a DNS service 380 and achieves the switching of the server systems to be described below. The DNS service 380 is implemented by a DNS module (not illustrated).

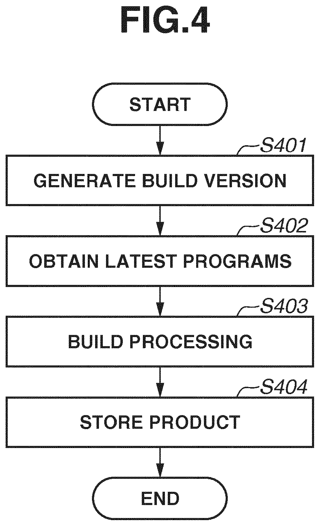

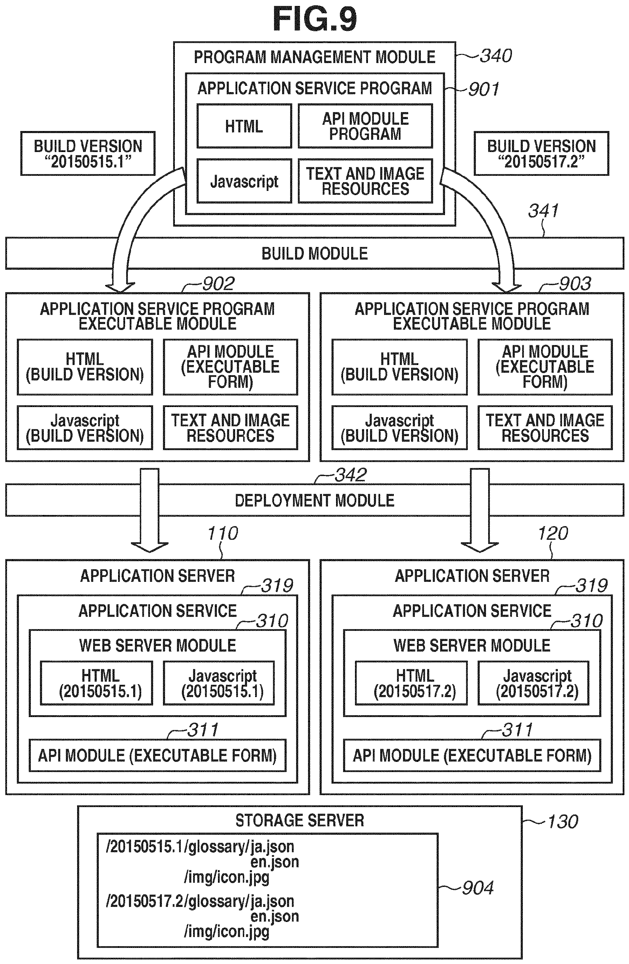

A detailed flow for building the application servers 110 and 120 according to the present embodiment will be described with reference to Figs. 4 to 6. Fig. 9, which schematically illustrates the processing flow, will also be described. Fig. 4 is a flowchart illustrating a flow of processing by which the build module 341 of the management server 140 builds the programs of the modules constituting the application servers 110 and 120 into an executable form.

In step S401, the build module 341 generates a build version as identification information with which build processing can be uniquely identified. For example, the build module 341 generates a character string including a combination of a date and a sequential value, such as "20150515.1". Each time the build module 341 builds programs for implementing the application servers 110 and 120 for deployment, the build module 341 generates unique identification information. No duplicates are allowed.

In step 402, the build module 341 obtains a set of latest programs of the application service 319 managed by the program management module 340. The set of latest programs includes an application service program 901 illustrated in Fig. 9. The application service program 901 includes an HTML for screen display, JavaScript (registered trademark) which is a script describing commands for obtaining resources to be used for screen display and commands for drawing the HTML, a program of the API module 311, and resources such as text data and image data to be used for screen display.

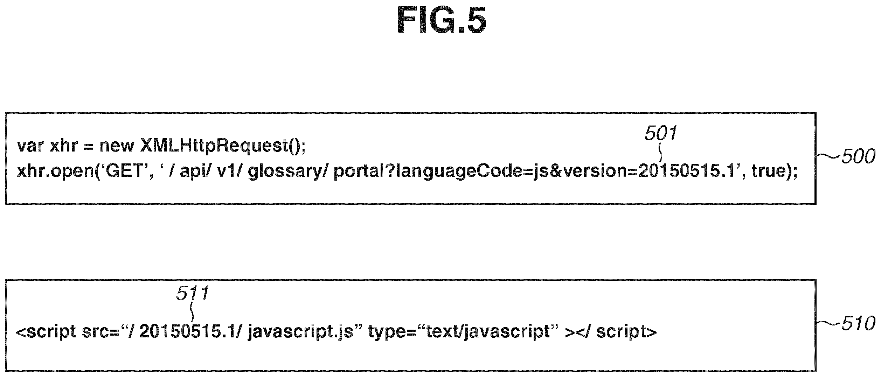

In step S403, the build module 341 performs build processing. The build module 341 compiles a program code into an executable form, and performs processing for embedding the build version generated in step S401 into API calls included in the HTML and JavaScript (registered trademark). Fig. 5 illustrates excerpts of examples of JavaScript (registered trademark) and an HTML actually generated. In JavaScript (registered trademark) 500, the build version "20150515.1" generated in step S401 is embedded in a parameter 501 of processing for calling a REST API. In an HTML 510, the build version "20150515.1" generated in step S401 is embedded in a reading path 511 to read the JavaScript (registered trademark) 500. As a result, the HTML 510 always uses the simultaneously-generated JavaScript (registered trademark) 500, and can transmit a request including the build version to the REST API via the JavaScript (registered trademark) 500. In step S404, the build module 341 stores the product generated in step S403 in association with the build version generated in step S401.

Fig. 9 illustrates a product 902 that is generated in the build version "20150515.1" and a product 903 that is generated in "20150517.2". The products 902 and 903 both include the latest programs at the respective build times, and the respective build versions are embedded in the HTML and JavaScript (registered trademark). For example, the product 902 in Fig. 9 constitutes the application server 110. The product 903 constitutes the application server 120. In such a manner, the build module 341 generates and manages a product for each upgrade. The processing by which the build module 341 of the management server 140 builds the programs of the application servers 110 and 120 in an executable form has been described above.

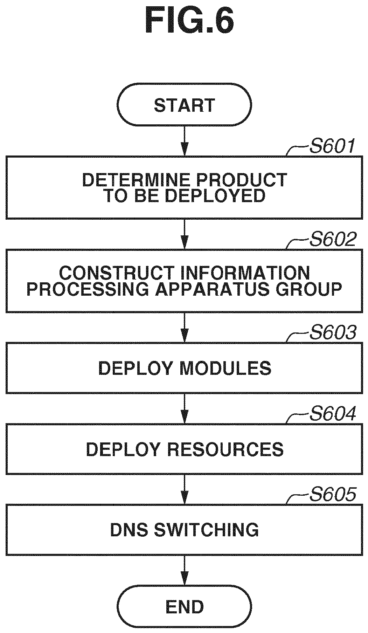

Fig. 6 is a flowchart illustrating a flow of processing by which the deployment module 342 of the management server 140 deploys the application servers 110 and 120 according to the present embodiment. In step S601, the deployment module 342 determines a product to be deployed. Specifically, the deployment module 342 identifies a build version to be deployed. In step S602, the deployment module 342 constructs an information processing apparatus group to be a deployment destination. Specifically, the deployment module 342 configures information processing apparatuses for hosting the programs. In conducting blue-green deployment, virtual information processing apparatuses are typically configured. Virtual information processing apparatuses are a technique for generating a plurality of virtual information processing apparatuses on the hardware of an information processing apparatus. Generation and deletion of virtual information processing apparatuses can be controlled by programs. For example, for each deployment, as many virtual information processing apparatuses can be generated as needed, and programs can be deployed to the virtual information processing apparatuses. Further, virtual information processing apparatuses that are no longer needed can be immediately deleted. This enables quick and easy implementation of blue-green deployment. The information processing apparatuses configured in the present invention are not limited to the virtual information processing apparatuses but may be physical information processing apparatuses. In such a case, for the information processing apparatuses, the environments for the respective application servers 110 and 120 need to be constructed in advance, and the modules are deployed in such environments. A deleted application server is excluded from the components of the system.

In step S603, the deployment module 342 deploys modules. The deployment module 342 deploys target modules in the information processing apparatuses constructed in step S602. The application servers 110 and 120 illustrated in Fig. 9 are configured in the respective versions. Modules of corresponding build versions, including an HTML, JavaScript (registered trademark), and an API module 311, are deployed in the respective application services 319.

In step S604, the deployment module 342 deploys resources. In the processing for deploying resources, the deployment module 342 gives information that can identify the build version to the storage server 130, so that the text and image resources included in the product generated in step S403 are stored. For example, suppose that the storage service 330 can manage data in a directory configuration like a typical file sharing server. As illustrated in an information 904 of Fig. 9, the deployment module 342 generates a directory with the build version, and stores text and image files under the directory.

The deployment processing of the application servers 110 and 120 has been described above. In the case of deployment by the upgrade work, another environment of the application server 120 is newly added in addition to the existing environment of the application server 110. At step S604, the settings of the DNS 180 are yet to be changed, and the client terminals 150 continue to access the application server 110.

In step S605, the DNS service 380 performs switching. This processing is typically performed after the processing in step S604 is performed and the application server 120 is confirmed to be normally running. In the DNS switching processing, the IP address corresponding to the hostname of the application server 110 registered in the DNS 180 is changed from the value of the application server 110 to that of the application server 120.

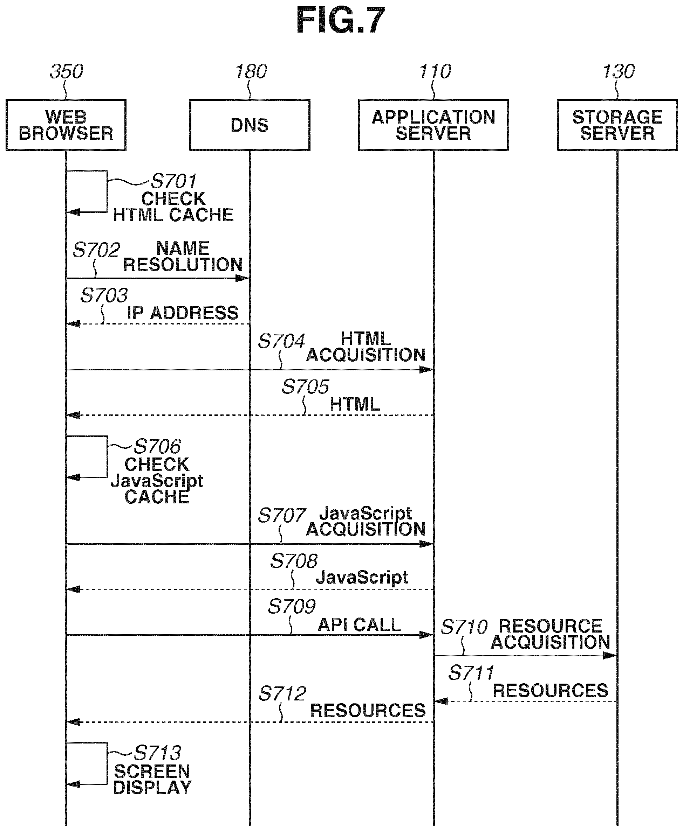

Fig. 7 is a diagram illustrating a typical processing flow when a client terminal 150 uses the application server 110 according to the present embodiment. An overview of processing to be performed when the web browser 350 uses an application configured by RESTful MVC will initially be described. The web browser 350 obtains an HTML for drawing a screen from the application server 110. The HTML includes a link to JavaScript (registered trademark), so that the web browser 350 obtains the JavaScript (registered trademark). The obtained JavaScript (registered trademark) is executed on the web browser 350, and the web browser 350 calls the REST API published on the application server 110 to obtain data. For example, the web browser 350 performs processing for specifying a desired language in which text for screen display is displayed and then calling the API to obtain the text data of the corresponding language. The web browser 350 rewrites the display text of the HTML with the text data of the language obtained to generate and display a screen. If various operations are performed on the web browser 350, the web browser 350 also calls the REST API and obtains the result to update the screen. In other words, if there is a discrepancy between the display text defined by the HTML and the text data obtained by the REST API, appropriate text may fail to be displayed on the HTML. The cause of such a phenomenon has been described in conjunction with the problem.

The processing flow will further be described in detail. Suppose that the web browser 350 starts to use the application server 110. In step S701, the web browser 350 checks whether there is an HTML of the application server 110 in a cache. If there is the HTML of the application server 110 in the cache, the web browser 350 uses the cached HTML. If not, the web browser 350 performs processing for obtaining the HTML in steps S704 and S705. In step S702, to obtain the HTML, the web browser 350 requests name resolution of the DNS 180. In step S703, the DNS 180 responds with the IP address corresponding to the application server 110. The processing of steps S702 and S703 is performed when the web browser 350 issues a request to the application server 110 after the activation of the web browser 350. In other words, the processing of steps S702 and S703 is performed immediately before steps S704, S707, and S709. Since typical browsers cache IP addresses once obtained from a DNS for a while, DNS inquiries may be omitted. The timing to reflect the DNS switching therefore depends on the type of the client terminal 150.

In response to the acquisition of the HTML, the web browser 350 obtains JavaScript (registered trademark) corresponding to the HTML. In step S706, as with the HTML, the web browser 350 checks whether there is the JavaScript (registered trademark) in the cache. If there is the JavaScript (registered trademark) in the cache, the web browser 350 uses the cached JavaScript (registered trademark). If not, the web browser 350 performs acquisition processing of steps S707 and S708 for the JavaScript (registered trademark), similarly to the HTML. In step S709, in response to the acquisition of the JavaScript (registered trademark), the web browser 350 calls the REST API described in the JavaScript (registered trademark). The parameters of this API call include the build version. In steps S710 and S711, the application server 110 obtains the resources of the build version specified by the API call from the storage server 130. In step S712, the application server 110 makes a response to the web browser 350. In step S713, the web browser 350, upon receiving the response, performs screen display based on the HTML and the resources corresponding to the HTML. The processing performed when the client terminal 150 uses the application server 110 has been described above. Upgrade processing is performed while this service is in use.

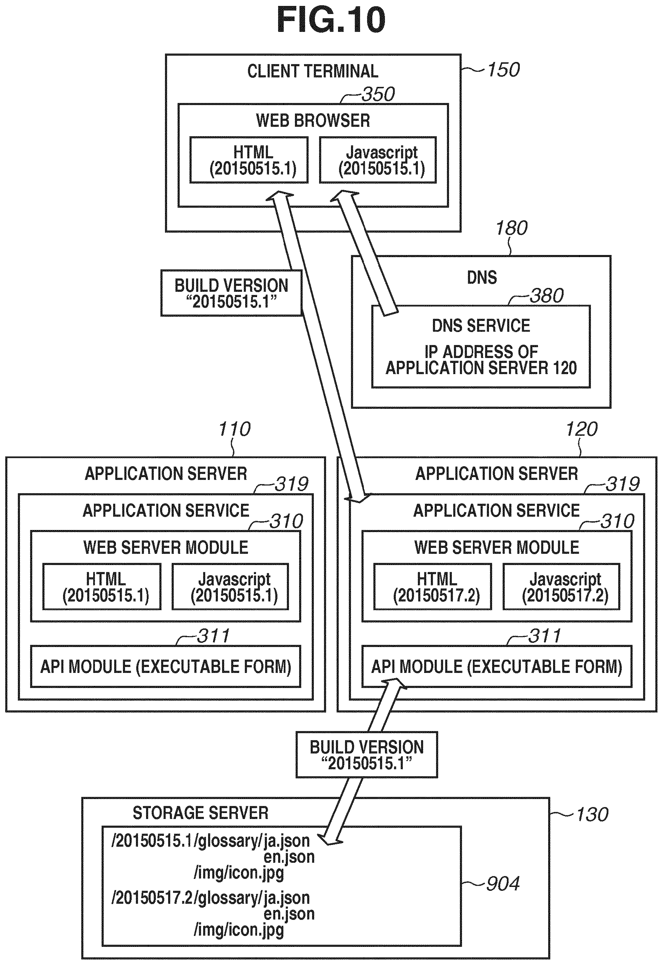

Referring to Fig. 7, an example of processing to be performed when the client terminal 150 uses the application server 120 after the upgrade processing will be described. Fig. 10 is a diagram schematically illustrating a flow of the processing. For example, the web browser 350 has already used the old version and cached the HTML and JavaScript (registered trademark) obtained from the application server 110 as illustrated in Fig. 10. Consequently, the name resolution processing of steps S702 and S703 in Fig. 7 is not performed. The HTML acquisition processing of steps S704 and S705 and the JavaScript (registered trademark) acquisition processing of steps S707 and S708 are also skipped. In step S709, the web browser 350 performs an API call. Here, the web browser 350 performs the name resolution processing of steps S702 and S703 to obtain the IP address of the application server from the DNS 180 for the first time. As illustrated in Fig. 10, the IP address that can be obtained in the processing is that of the application server 120. The API call in step S709 is thus performed with respect to the application server 120. During this API call, the build version corresponding to the application server 110 is passed to the application server 120 as a parameter. As illustrated in Fig. 10, in the present embodiment, the build version "20150515.1" provided by the application server 110 is passed to the application server 120. The application server 120 checks whether the build versions are coincident with each other. In the processing of steps S710 and S711, the application server 120 obtains the resources corresponding to the application server 110 from the storage server 130. In step S712, the application server 120 makes a response. In step S713, the web browser 350 can normally perform processing for displaying a screen based on the cached HTML and JavaScript (registered trademark) obtained from the application server 110, and the corresponding resources obtained from the application server 120.

As described above, according to the present embodiment, a system that includes a mechanism for providing a service nonstop can maintain compatibility of screen HTMLs in addition to that of I/Fs.

A second embodiment will be described below. Processing that is implementable in addition to the first embodiment of the present invention will be described. The present processing relates to processing for deleting the environment of the application server 110 after a lapse of a certain time from the end of the upgrade, and processing to be performed when the resources of the application server 110 are requested after the deletion.

The deployment module 342 of the management server 140 performs the processing for deleting the application server 110 after the end of the upgrade. The deployment module 342 deletes the application server 110 by excluding the application server 110 from the components of the system targeted for service provision. Here, the resource data of the build version corresponding to the application server 110 is also deleted from the storage server 130. In this processing, the entire application server 110 is deleted. The user gives the delete specification at an arbitrary timing.

Next, the processing to be performed when the resources of the application server 110 are requested will be described. Assume here a point in time when the cache of the HTML has expired and there is no longer a resource request corresponding to the application server 110. Since caches on the Internet are not controllable by the server system, resources corresponding to the application server 110 may be requested after the deletion of the resources due to an unexpected factor.

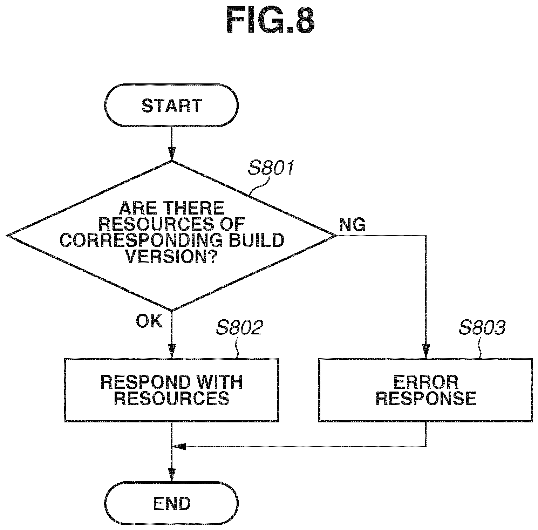

Fig. 8 illustrates a flow of processing of the API module 311 in consideration of the reception of an unexpected request. Suppose that the API module 311 receives the API call from the web browser 350 in step S709. In step S801, the API module 311 performs processing for obtaining resources corresponding to the build version specified by the parameter. If there are corresponding resources in the storage server 130 (OK in step S801), then in step S802, the API module 311 responds with the resources. If not (NG in step S801), then in step S803, the API module 311 generates and responds with an error response. One of meanings of the error response is to instruct the web browser 350 to discard the cache and obtain the HTML again. Upon receiving the error response, the web browser 350 reloads itself by using JavaScript (registered trademark). The execution of the reload processing eliminates the cached HTML, and the web browser 350 obtains a new HTML and JavaScript (registered trademark) from the application server 120. The web browser 350 further performs an API call to obtain the resources corresponding to the application server 120. The web browser 350 can thus display a correct screen of the application server 120.

### Other Embodiments

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to embodiments, it is to be understood that the invention is not limited to the disclosed embodiments. It will of course be understood that this invention has been described above by way of example only, and that modifications of detail can be made within the scope of the invention as defined in the appended claims.

## Claims

1. A server system including an application server system that provides a service according to a request from a web browser (350) included in a terminal (150), the server system configured to change the application server system from a first application server system to a second application server system, the server system comprising:
deployment means (342) configured to deploy (S603) a plurality of modules for implementing the service in the second application server system, the plurality of modules having a configuration different at least in part from that of a plurality of modules for implementing the service, deployed in the first application server system;
storage means (130) configured to store (S604) a first resource corresponding to the plurality of modules deployed in the first application server system and a second resource corresponding to the plurality of modules deployed in the second application server system, the first and second resources being resources required to display a screen to be displayed by the web browser (350); and
switching means (380) configured to switch (S605) a source of the service from the first application server system to the second application server system after deployment is performed by the deployment means (342),
wherein, after switching by the switching means, the first application server system is excluded from components of the server system, and the first resource is deleted from the storage means (130),
wherein, after switching by the switching means (380), if a request regarding display of the screen is accepted from the web browser and data included in the request is confirmed to be associated with the first resource, the second application server system is configured to obtain (S710) the first resource from the storage means (130) and transmit (S712) the first resource to the web browser (350) in a case where the first resource has been stored in the storage means, and to generate an error response and transmit (S803) the generated error response to the web browser in a case where the first resource has not been stored in the storage means (130).

2. The server system according to claim 1,
wherein the data included in the request is identification information,
wherein the storage means (130) is configured to store the first resource and the second resource in association with respective unique pieces of identification information, and
wherein the server system is configured to transmit the first resource or the second resource to the web browser (350) according to confirmation of coincidence of the identification information.

3. The server system according to claim 2, wherein the second application server system is configured to transmit to the web browser (350) an HTML code for displaying the screen, a script for drawing the screen based on the HTML code, and the resource, the script including identification information, the script being executable to receive the transmitted identification information.

4. The server system according to claim 2 or claim 3, wherein the identification information is identification information generated each time a plurality of modules is deployed in the application server system, the identification information being generated from a date and a sequential value.

5. The server system according to any preceding claim, wherein, if the first resource is deleted from the storage means (130), the second application server system is configured to transmit data for causing the web browser (350) to discard a cache related to the screen and receive an HTML code for displaying the screen, a script for drawing the screen based on the HTML code, and the resource.

6. A method to be executed by a server system including an application server system that provides a service according to a request from a web browser (350) included in a terminal (150), to change the application server system from a first application server system to a second application server system, the method comprising:
deploying (S603) a plurality of modules for implementing the service in the second application server system, the plurality of modules having a configuration different at least in part from that of a plurality of modules for implementing the service deployed in the first application server system;
storing (S604) a first resource corresponding to the plurality of modules deployed in the first application server system and a second resource corresponding to the plurality of modules deployed in the second application server system, the first and second resources being resources required to display a screen to be displayed by the web browser; and
switching (S605) a source of the service from the first application server system to the second application server system after the deploying is performed,
wherein, after switching, the first application server system is excluded from components of the server system, and the first resource is deleted,
wherein, if a request regarding display of the screen is accepted from the web browser after the switching and data included in the request is confirmed to be associated with the first resource, the method further comprises the second application server system obtaining (S710) the stored first resource and transmitting (S712) the first resource to the web browser (350) in a case where the first resource has been stored, and generating an error response and transmitting (S803) the generated error response to the web browser in a case where the first resource has not been stored.

7. A program for causing a server system to execute the method according to claim 6

8. A computer-readable storage medium storing a program according to claim 7.

## Patentansprüche

1. Serversystem, das ein Anwendungsserversystem enthält, das einen Dienst gemäß einer Anfrage von einem Webbrowser (350) bereitstellt, der in einem Terminal (150) enthalten ist, wobei das Serversystem konfiguriert ist zum Ändern des Anwendungsserversystems von einem ersten Anwendungsserversystem zu einem zweiten Anwendungsserversystem, wobei das Serversystem umfasst:
eine Verteileinrichtung (342), die konfiguriert ist zum Verteilen (S603) mehrerer Module im zweiten Anwendungsserversystem zum Implementieren des Diensts, wobei die mehreren Module eine Konfiguration aufweisen, die sich zumindest teilweise von derjenigen von mehreren im ersten Anwendungsserversystem verteilten Modulen zum Implementieren des Diensts unterscheiden;
eine Speichereinrichtung (130), die konfiguriert ist zum Speichern (S604) einer ersten Ressource entsprechend den mehreren im ersten Anwendungsserversystem verteilten Modulen und einer zweiten Ressource entsprechend den mehreren im zweiten Anwendungsserversystem verteilten Modulen, wobei die ersten und zweiten Ressourcen Ressourcen sind, die zum Anzeigen eines durch den Webbrowser (350) anzuzeigenden Bildschirms erforderlich sind; und
eine Umschalteinrichtung (380), die konfiguriert ist zum Umschalten (S605) einer Quelle des Diensts vom ersten Anwendungsserversystem zum zweiten Anwendungsserversystem, nachdem das Verteilen durch die Verteileinrichtung (342) durchgeführt wird,
wobei, nach dem Umschalten durch die Umschalteinrichtung das erste Anwendungsserversystem von den Komponenten des Serversystems ausgeschlossen wird und die erste Ressource aus der Speichereinrichtung (130) gelöscht wird,
wobei, nach Umschalten durch die Umschalteinrichtung (380), falls eine Anfrage bezüglich der Anzeige des Bildschirms vom Webbrowser akzeptiert wird und in der Anfrage enthaltene Daten mit der ersten Ressource assoziiert werden können, das zweite Anwendungsserversystem konfiguriert ist zum Erhalten (S710) der ersten Ressource von der Speichereinrichtung (130) und zum Übertragen (S712) der ersten Ressource an den Webbrowser (350), falls die erste Ressource in der Speichereinrichtung gespeichert worden ist, und zum Erzeugen einer Fehlerrückmeldung und zum Übertragen (S803) der erzeugten Fehlerrückmeldung an den Webbrowser, falls die erste Ressource nicht in der Speichereinrichtung (130) gespeichert worden ist.

2. Serversystem nach Anspruch 1,
wobei die in der Anfrage enthaltenen Daten Identifikationsinformation sind,
wobei die Speichereinrichtung (130) konfiguriert ist zum Speichern der ersten und zweiten Ressource in Verbindung mit jeweiligen eindeutigen Identifikationsinformationsteilen, und
wobei das Serversystem konfiguriert ist zum Übertragen der ersten und zweiten Ressource an den Webbrowser (350) gemäß zutreffender Übereinstimmung der Identifikationsinformation.

3. Serversystem nach Anspruch 2, wobei das zweite Anwendungsserversystem konfiguriert ist zum Übertragen eines HTML-Codes an den Webbrowser (350) zum Anzeigen des Bildschirms, eines Skripts zum Zeichnen des Bildschirms basierend auf dem HTML-Code, und der Ressource, wobei das Skript Identifikationsinformation enthält und das Skript zum Empfangen der übertragenen Identifikationsinformation ausführbar ist.

4. Serversystem nach Anspruch 2 oder 3, wobei die Identifikationsinformation Identifikationsinformation ist, die jedes Mal erzeugt wird, wenn mehrere Module im Anwendungsserversystem verteilt werden, wobei die Identifikationsinformation aus einem Datum und einem Sequenzwert erzeugt wird.

5. Serversystem nach einem der vorangegangenen Ansprüche, wobei, falls die erste Ressource aus der Speichereinrichtung (130) gelöscht wird, das zweite Anwendungsserversystem konfiguriert ist zum Übertragen von Daten zum Veranlassen des Webbrowsers (350), einen Cache zu leeren, der sich auf den Bildschirm bezieht und Empfangen eines HTML-Codes zum Anzeigen des Bildschirms, eines Skripts zum Zeichnen des Bildschirms basierend auf dem HTML-Code, und der Ressource.

6. Verfahren zur Ausführung durch ein Serversystem, das ein Anwendungsserversystem enthält, das einen Dienst gemäß einer Anfrage von einem Webbrowser (350) bereitstellt, der in einem Terminal (150) enthalten ist, zum Ändern des Anwendungsserversystems von einem ersten Anwendungsserversystem zu einem zweiten Anwendungsserversystem, wobei das Verfahren umfasst:
Verteilen (S603) mehrerer Module im zweiten Anwendungsserversystem zum Implementieren des Diensts, wobei die mehreren Module eine Konfiguration aufweisen, die sich zumindest teilweise von derjenigen von mehreren im ersten Anwendungsserversystem verteilten Modulen zum Implementieren des Diensts unterscheiden;
Speichern (S604) einer ersten Ressource entsprechend den mehreren im ersten Anwendungsserversystem verteilten Modulen und einer zweiten Ressource entsprechend den mehreren im zweiten Anwendungsserversystem verteilten Modulen, wobei die ersten und zweiten Ressourcen Ressourcen sind, die zum Anzeigen eines durch den Webbrowser anzuzeigenden Bildschirms erforderlich sind; und
Umschalten (S605) einer Quelle des Diensts vom ersten Anwendungsserversystem zum zweiten Anwendungsserversystem, nachdem das Verteilen durchgeführt wird,
wobei nach dem Umschalten das erste Anwendungsserversystem von den Komponenten des Serversystems ausgeschlossen wird und die erste Ressource gelöscht wird,
wobei, falls eine Anfrage bezüglich der Anzeige des Bildschirms vom Webbrowser nach dem Umschalten akzeptiert wird und in der Anfrage enthaltene Daten mit der ersten Ressource assoziiert werden können, das Verfahren ferner ein zweites Anwendungsserversystem umfasst, zum Erhalten (S710) der gespeicherten ersten Ressource und zum Übertragen (S712) der ersten Ressource an den Webbrowser (350), falls die erste Ressource gespeichert worden ist, und zum Erzeugen einer Fehlerrückmeldung und zum Übertragen (S803) der erzeugten Fehlerrückmeldung an den Webbrowser, falls die erste Ressource nicht gespeichert worden ist.

7. Programm zum Veranlassen eines Serversystems, das Verfahren nach Anspruch 6 auszuführen.

8. Computerlesbares Speichermedium, das ein Programm nach Anspruch 7 speichert.

## Revendications

1. Système serveur comprenant un système serveur d'application qui fournit un service conformément à une demande en provenance d'un navigateur Web (350) compris dans un terminal (150), le système serveur étant configuré pour faire passer le système serveur d'application d'un premier système serveur d'application à un second système serveur d'application, le système serveur comprenant :
un moyen de déploiement (342) configuré pour déployer (S603) une pluralité de modules destinés à implémenter le service dans le second système serveur d'application, la pluralité de modules ayant une configuration différente au moins en partie de celle d'une pluralité de modules destinés à implémenter le service, déployés dans le premier système serveur d'application ;
un moyen de mémorisation (130) configuré pour mémoriser (S604) une première ressource correspondant à la pluralité de modules déployés dans le premier système serveur d'application et une seconde ressource correspondant à la pluralité de modules déployés dans le second système serveur d'application, les première et seconde ressources étant des ressources nécessaires pour afficher un écran à afficher par le navigateur Web (350) ; et
un moyen de commutation (380) configuré pour commuter (S605) une source du service du premier système serveur d'application au second système serveur d'application après l'exécution du déploiement par le moyen de déploiement (342),
dans lequel, après une commutation par le moyen de commutation, le premier système serveur d'application est exclu de composants du système serveur, et la première ressource est supprimée du moyen de mémorisation (130),
dans lequel, après une commutation par le moyen de commutation (380), si une demande concernant un affichage de l'écran est acceptée à partir du navigateur Web et si des données comprises dans la demande sont confirmées comme devant être associées à la première ressource, le second système serveur d'application est configuré pour obtenir (S710) la première ressource à partir du moyen de mémorisation (130) et pour transmettre (S712) la première ressource au navigateur Web (350) dans un cas dans lequel la première ressource a été mémorisée dans le moyen de mémorisation, et pour générer une réponse d'erreur et transmettre (S803) la réponse d'erreur générée au navigateur Web dans un cas dans lequel la première ressource n'a pas été mémorisée dans le moyen de mémorisation (130).

2. Système serveur selon la revendication 1,
dans lequel les données comprises dans la demande sont des informations d'identification,
dans lequel le moyen de mémorisation (130) est configuré pour mémoriser la première ressource et la seconde ressource en association avec des éléments informations d'identification respectifs uniques, et
le système serveur étant configuré pour transmettre la première ressource ou la seconde ressource au navigateur Web (350) conformément à une confirmation de coïncidence des informations d'identification.

3. Système serveur selon la revendication 2, dans lequel le second système serveur d'application est configuré pour transmettre, au navigateur Web (350), un code HTML à des fins d'affichage de l'écran, un script à des fins d'extraction de l'écran sur la base du code HTML, et la ressource, le script comprenant des informations d'identification, le script pouvant être exécuté pour recevoir les informations d'identification transmises.

4. Système serveur selon la revendication 2 ou la revendication 3, dans lequel les informations d'identification sont des informations d'identification générées à chaque déploiement d'une pluralité de modules dans le système serveur d'application, les informations d'identification étant générées à partir d'une date et d'une valeur séquentielle.

5. Système serveur selon l'une quelconque des revendications précédentes, dans lequel, si la première ressource est supprimée du moyen de mémorisation (130), le second système serveur d'application est configuré pour transmettre des données ayant pour objet d'amener le navigateur Web (350) à rejeter un cache associé à l'écran et pour recevoir un code HTML à des fins d'affichage de l'écran, un script à des fins d'extraction de l'écran sur la base du code HTML, et la ressource.

6. Procédé à exécuter par un système serveur comprenant un système serveur d'application qui fournit un service conformément à une demande en provenance d'un navigateur Web (350) compris dans un terminal (150), pour faire passer le système serveur d'application d'un premier système serveur d'application à un second système serveur d'application, le procédé comprenant les étapes consistant à :
déployer (S603) une pluralité de modules destinés à implémenter le service dans le second système serveur d'application, la pluralité de modules ayant une configuration différente au moins en partie de celle d'une pluralité de modules destinés à implémenter le service déployés dans le premier système serveur d'application ;
mémoriser (S604) une première ressource correspondant à la pluralité de modules déployés dans le premier système serveur d'application et une seconde ressource correspondant à la pluralité de modules déployés dans le second système serveur d'application, les première et seconde ressources étant des ressources nécessaires pour afficher un écran à afficher par le navigateur Web ; et
commuter (S605) une source du service du premier système serveur d'application au second système serveur d'application après l'exécution du déploiement,
où, après la commutation, le premier système serveur d'application est exclu de composants du système serveur, et la première ressource est supprimée,
où, si une demande concernant un affichage de l'écran est acceptée à partir du navigateur Web après la commutation et si des données comprises dans la demande sont confirmées comme devant être associées à la première ressource, le procédé comprend en outre les étapes consistant à obtenir (S710), par le second système serveur d'application, la première ressource mémorisée et transmettre (S712) la première ressource au navigateur Web (350) dans un cas dans lequel la première ressource a été mémorisée, et générer une réponse d'erreur et transmettre (S803) la réponse d'erreur générée au navigateur Web dans un cas dans lequel la première ressource n'a pas été mémorisée.

7. Programme destiné à amener un système serveur à exécuter le procédé selon la revendication 6.

8. Support d'informations lisible par ordinateur contenant en mémoire un programme selon la revendication 7.
